(19) Europäisches Patentamt
European Patent Office
Office européen des brevets

(11) **EP 1 412 867 B1**

(12) **EUROPEAN PATENT SPECIFICATION**

(45) Date of publication and mention
of the grant of the patent:
**19.11.2008 Bulletin 2008/47**

(51) Int Cl.:
*G06F 15/16* (2006.01)   *H04L 12/58* (2006.01)
*H04L 29/08* (2006.01)   *G06F 17/30* (2006.01)

(21) Application number: **02744439.7**

(22) Date of filing: **18.06.2002**

(86) International application number:
**PCT/US2002/019397**

(87) International publication number:
**WO 2003/005220 (16.01.2003 Gazette 2003/03)**

(54) **Device and method for converting an attachment in an e-mail for delivery to a device of limited rendering capability**

Vorrichtung und Verfahren zum Umwandeln einer Anlage in einer Email zur Weiterleitung an ein Gerät mit begrenzter Wiedergabefähigkeit

Dispositif et procédé de transformation d'un document joint envoyé dans un courriel en vue de distribuer ce document joint à un dispositif ayant une capacité de rendu limitée

(84) Designated Contracting States:
**AT BE CH CY DE DK ES FI FR GB GR IE IT LI LU MC NL PT SE TR**

(30) Priority: **03.07.2001 US 898134**

(43) Date of publication of application:
**28.04.2004 Bulletin 2004/18**

(73) Proprietor: **Nokia Inc.**
**Irving, TX 75039 (US)**

(72) Inventors:
• BERGER, Adam L.
**Pittsburgh, PA 15217 (US)**
• SCHOHN, Gregory C.
**Durham, NC 27701 (US)**
• ROMERO, Richard D.
**Pittsburgh, PA 15207 (US)**

(74) Representative: **Piotrowicz, Pawel Jan Andrzej et al**
**Venner Shipley LLP**
**Byron House**
**Cambridge Business Park**
**Cowley Road**
**Cambridge CB4 0WZ (GB)**

(56) References cited:
EP-A- 0 950 969          WO-A-00/42531
WO-A-00/64110           DE-A- 19 962 192
US-A- 6 012 098          US-B1- 6 178 461
US-B1- 6 327 616         US-B1- 6 336 124
US-B1- 6 347 340         US-B1- 6 356 529

• WOO T Y C ET AL: "Providing Internet services to mobile phones: a case study with email" PERSONAL, INDOOR AND MOBILE RADIO COMMUNICATIONS, 1998. THE NINTH IEEE INTERNATIONAL SYMPOSIUM ON BOSTON, MA, USA 8-11 SEPT. 1998, NEW YORK, NY, USA,IEEE, US, 8 September 1998 (1998-09-08), pages 99-105, XP010314728 ISBN: 0-7803-4872-9
• BICKMORE T ET AL: "WEB PAGE FILTERING AND RE-AUTHORING FOR MOBILE USERS" COMPUTER JOURNAL, OXFORD UNIVERSITY PRESS, SURREY, GB, vol. 42, no. 6, 1999, pages 534-546, XP000920338 ISSN: 0010-4620
• PATENT ABSTRACTS OF JAPAN vol. 2000, no. 12, 3 January 2001 (2001-01-03) & JP 2000 261493 A (HITACHI LTD), 22 September 2000 (2000-09-22)

**Description**

The present invention relates to a method of and a device for converting an attachment in an e-mail for delivery to a client device of limited rendering capability

Traditionally, people have accessed their e-mail from a conventional desktop or laptop computer. These "local" computers typically communicate with a remote e-mail server to obtain newly-arrived mail and to dispatch recently composed mail by the user to a recipient.

Recently, however, wireless devices such as data-enabled phones, personal digital assistants (PDAs) and handheld computers have entered the marketplace. Further, there exist software products that allow the users of these devices to access e-mail stored on their behalf by an e-mail server. However, these devices typically have low communication rates on wireless networks and have small memories. As a result, some of these devices cannot render, for example, an attachment or embedded link in an e-mail that exceeds the rendering capabilities of the device. Consequently, accessing the e-mail attachment or embedded link can be unwieldy or even impossible using these devices.

The prior art includes some approaches to solving this problem. One solution includes having the proxy server, when it discovers that an e-mail to be sent to a device of limited rendering capability contains an attachment, dropping the attachment from the email and instead including an vindication, such as an icon, in the e-mail sent to the device, wherein the indication denotes that there was an attachment to the original version of the e-mail. That way, the user may, if so desired, use a desktop computer to access the e-mail, and hence the attachment. According to another solution, the proxy server may drop the attachment from the e-mail and instead include a hyperlink in the e-mail sent to the device, wherein the hyperlink corresponds to the attachment. The device user may then, by selecting the hyperlink, have the attachment fazed to him at a nearby fax machine or forwarded to another e-mail account. Both of these prior art solutions, however, suffer from the drawback that the user is effectively prevented from accessing the attachment with the limited rendering capability device.

It is also known in the prior art to "push" the text content of an e-mail message from an e-mail server to a mobile device. However, such systems are for delivering text only, and therefore cannot be used to send hyperlinks or attachments. As a result, the user of the mobile device is not capable of accessing a hyperlink or an attachment that is sent to the user with an e-mail using such a system.

Reference is made to the following documents:

"Providing internet services to mobile phones: a case study", Woo et al., Personal, Indoor and Mobile Radio Communication, 1998 IEEE pp. 99-105 (1998) describes a system in which a mobile handset can request a message from a Wireless Data Servet (WDS). The WDS can convert a message into speech or a fax message. EP-A-0950969 describes a method of and system for exchanging electronic messages in which a message attachment can be converted from one file format to a second file format.

WO-A-0064110 describes a method of delivering messages in a communication network.

"Web Page Filtering and Re-Authorising for Mobile Users", Bickmore et al.,The Computer Journal, vol.42, pp. 534-546 (1999) describes a system for converting web-based documents designed for desktop viewing into formats appropriate for handheld devices with small screens.

WO-A-0042531 describes a method of automatically creating a hyperlinked abstract of a markup language document.

DE-A-19962192 discloses a method of converting content of electronic data.

The present invention seeks to provide a method of and a device for converting an attachment in an e-mail for delivery to a client device of limited rendering capability.

According to the present invention there is provided a method for converting an attachment in an e-mail for delivery to a client device of limited rendering capability, comprising downloading the e-mail and the attachment in response to a request from a client device for the e-mail, transforming the attachment into a plurality of sub-documents, each sub-document being expressed in a format that is compatible with the client device and being a size not greater than a maximum rendering size capability of the client device, wherein a first sub-document includes a link to a second sub-document; and serving the first sub-document to the client device.

The method may further comprise serving the e-mail to the client device, the e-mail including a link to the attachment and receiving a request from the client device corresponding to an invocation of the link for the attachment, wherein transforming the attachment into the plurality of sub-documents is performed after receiving the request from the client device corresponding to the invocation of the link for the attachment. The method may further comprise downloading the e-mail and the attachment in response to receiving the request for the e-mail and the attachment from the client device; and storing the e-mail and the attachment. Storing the e-mail and the attachment may be performed prior to transforming the attachment. The method may further comprise serving the second document to the client device in response receiving from the client device an invocation of the link to the second sub-document. The method may further comprise altering a portion of text of the attachment based on preferences associated with the client device. Altering the portion of text of the attachment may be performed prior to transforming the attachment into a plurality of sub-documents. Downloading the attachment may include downloading an attachment that is expressed in a first format that is incompatible with the client device and transforming the attachment includes: transforming the attachment to a second format, segmenting the attachment into the plurality of sub-documents; and transforming the first sub-document to a third format that is compatible with the client device prior to serving the first sub-document to the client device. Transforming the attachment to a second format may include transforming the attachment to XML. Tansforming the first sub-document to a third format may include one of transforming the first-subdocument to WML, transforming the first-subdocument to HDML, and transforming the first-subdocument to HTML.

Transforming the attachment to a second format may include transforming the attachment to a second format that includes a hierarchy of segments; and segmenting the attachment into a plurality of sub-documents includes assembling the sub-documents from the segments. Assembling may include assembling the sub-documents from the segments according to an algorithm that favours assembling each of the subdocuments from segments that have common parents in the hierarchy. Assembling may include assembling the sub-docaments according to an algorithm that favours balancing respective sizes of the sub-documents. Assembling may include assembling the sub-documents from the segments according to an algorithm that favours assembling each of the sub-documents from segments for which replications of nodes in the hierarchy is not required.

According to the present invention there is also provided a device for converting an attachment in an e-mail for delivery to a client device of limited rendering capability, comprising a conversion module for converting the attachment to an intermediate format, a segmentation module for segmenting the attachment into a plurality of sub-documents, each sub-document being a size not greater than a maximum rendering size capability of the client device, wherein a first sub-document includes a link to a second sub-document; and a translation module for translating one of the sub-documents to a format that is compatible with the client device for serving to the client device.

The device may further comprise a transformation module for altering a portion of tert of the attachment based on preferences associated with the client device. The device may further comprise a content reorganization module for reorganizing content in the attachment. The device may further comprise a response template module for serving to client device a sub-document including a response template for responding to the e-mail.

Embodiments of the present invention will now be described, by way of example, with preference to the accompanying drawings in which:

Figure 1 is a block diagram of a system according to one embodiment of the present invention;
Figure 2 illustrates a method of segmenting a document according to one embodiment of the present invention;
Figure 3 is a diagram of the segmentation process according to one embodiment of the present invention;
Figures 4 and 5 are diagrams illustrating hierarchical tree structures of an XML document;
Figure 6 illustrates an example of an e-mail message segmented into a number of sub-documents according to one embodiment of the present invention;
Figures 7 and 8 are diagrams illustrating a method of transforming an attachment document into subdocuments according to user-defined preferences according to one embodiment of the present invention;
Figure 9 is a block diagram of the proxy server of Figure 1 according to one embodiment of the present invention;
Figure 10 illustrates a typical web page;
Figure 11 is a diagram illustrating a method of reorganizing the content of the email attachment of web page referred to by an embedded link in an e-mail according to one embodiment of the present invention;
Figures 12 and 13 illustrate examples of HTML source documents and their respective corresponding tree-based representation according to an embodiment of the present invention;
Figure 14 illustrates an example of a tree before and after the packaging of unmovable nodes according to one embodiment of the present invention;
Figure 15 illustrates a sorting process according to one embodiment of the present invention; and
Figure 16 is a diagram of a client device displaying a response template according to one embodiment of the present invention.

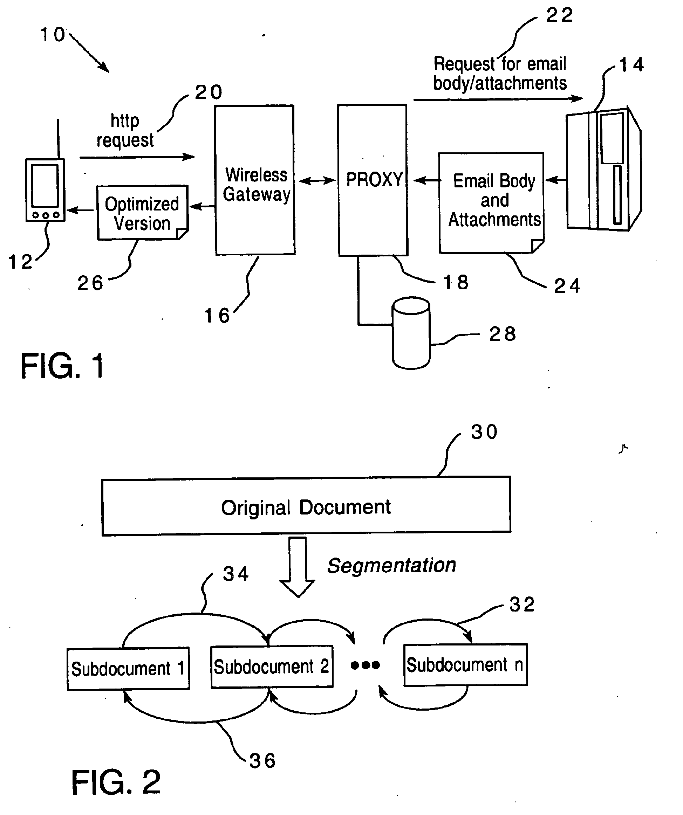

Figure 1 is a diagram of a system 10 according to one embodiment of the present invention. The system 10 includes an Internet-enabled device 12 in communication with a mail server 14 via a wireless gateway 16 and a proxy server 18. The device 12 may be, for example, a wireless device such as data-enabled phone, such as a WAP (wireless application protocol) -enabled phone, a personal digital assistant (PDA), or a handheld computer. The present invention will be described herein as pertaining to a wireless device, however, it should be noted that the device 12 may be any type of Internet-enabled device having limited rendering capability including, for example, certain wireline device applications, and is sometimes referred to herein as the "client" or "client device".

The wireless device 12 may transmit an e-mail request 20 over a communication channel using, for example, HTTP (HyperText Transfer Protocol), that is routed to the wireless gateway 16 by the wireless network (not shown) used by the device 12. The wireless network may be, for example, a CPDP, CDMA, TDMA, or GSM network The wireless gateway 16 may mediate the communications between the wireless network and the wired communication infrastructure of the mail server 14, passing the HTTP request from the device 12 to the proxy server 18. The proxy server 18 may be, for example, a computer that mediates between the mail server 14, which stores the e-mail, and the device 12, to which the e-mail is to be delivered. The proxy server 18 may convert the request 22 for the device 12 to a format conforming to the protocol employed by the mail server 14. The protocol employed by the mail server 14 may be, for example, a version of IMAP (Internet Message Access Protocol) or POP (Post Office Protocol), or a proprietary protocol.

Upon receiving the formatted request, the mail server 14 may send the requested e-mail document, including its body and any attachments 24, to the proxy server 18. The attachments may be, for example, a PDF file document, a PostScript file document, an HTML document, or a word-processing document (such as, e.g., a Microsoft Word document). The proxy server 18 may then convert the attachments, if necessary, into a format that is compatible with the wireless device 12. For example, if the wireless device 12 is a WAP device, the proxy server 18 may convert the attachments to the WML format. In addition, as described further hereinbelow, the proxy server 18 may segment the attachments into smaller pieces, called subdocuments 26, each of which is smaller than the maximum size threshold of the client device. For example, WAP-enabled phones typically impose a limit of at most 2000 bytes on documents. Accordingly, the proxy server 18 may, for example, segment any attachment that is greater than this threshold value into several smaller pieces or truncate the attachment to thereby satisfy the requirements of the client. When requested by the user of the wireless device 12, the resegmented attachments 26 may be transmitted to the wireless device 12 from the proxy server 18 over a wireless communication channel via the wireless gateway 16. The segmenting of the document need not be done by the proxy server 18, but rather may be performed by other devices in the network.

The system 10 may also include a database 28 for storing user-defined preferences that are used by, for example, the proxy server 18 in formatting the subdocuments 26 for the client device 12, as described further hereinafter.

As shown in Figure 2, the attachment 30 may be segmented into a number of sub-documents 32. Each of the subdocuments 32 delivered by the proxy server 18 to the client contains hyperlinks 34, 36 to the next and previous (each where applicable) subdocuments in the series. The hyperlinks are displayed to the user of the client device. If the user selects a forward-pointing (or backward-pointing) hyperlink from a subdocument, that request is transmitted to the proxy server 18, which responds with the next (or previous) subdocument.

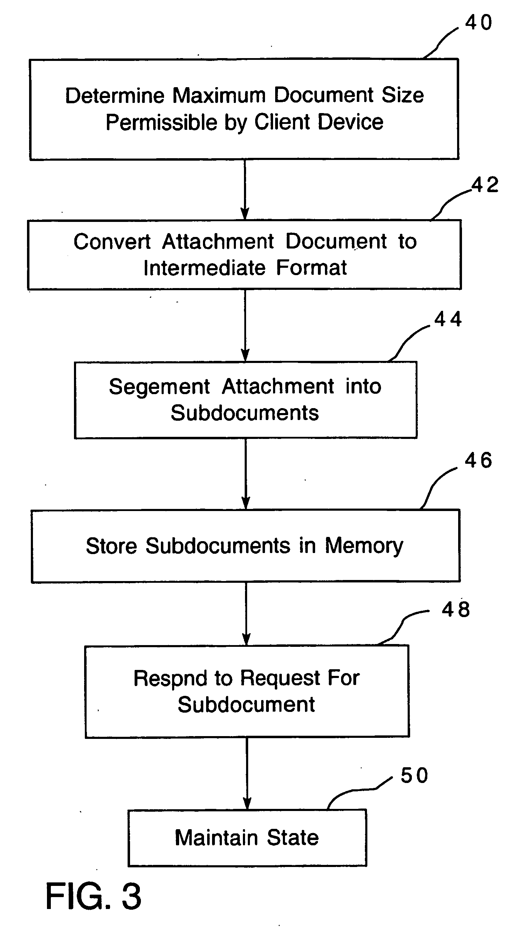

Figure 3 is a block diagram of the process flow of the segmentation process according to one embodiment of the present invention that may be performed by the proxy server 18. The first step of the segmentation process 40 is to determine the maximum document size permissible by the client device. If the client-server communication adheres to the HTTP protocol standards as described in RFC2616 (R. Fielding et al., RFC 2616: Hypertext Transfer Protocol - HTTP/1.1. June, 1999.**http://www.w3.org/Protocols/rfc2616/rfc2616.txt**.), the client advertises information about itself to the proxy server 18 within the header information sent in the HTTP request. The proxy server 18 can use, for instance, the value of the USER-AGENT field to determine the type of microbrowser installed on the client device and, from this information, determine the maximum document size by consulting a table listing the maximum document size for all known client devices.

The length of the attachment document may be denoted by N. The maximum permissible length of a document allowed by the client may be denoted as M. Any segmentation algorithm that respects the client-imposed maximum length of M must generate from a length-N document at least $ceil(N/M)$ segments.

The next step of the segmentation process 42 is to convert the attachment document into an intermediate format. According to one embodiment, converting the attachment to an intermediate format may include converting it to a markup language such as, for example, XML, a markup language whose tags imply a hierarchical tree structure on the document. Conversion to XML from many different source formats, including HTML, can be done using existing software packages. According to one embodiment, the XHTML version of XML may be used as the intermediate format.

The third step 44 is to divide or segment the markup language document into segments, each of whose length is not greater than M. According to one embodiment, the segmenting process may include, for example, evenly spacing "seams" within the attachment such that each subdocument has a length of less than M. Sometimes, however, this naive approach results in seams being placed in inconvenient locations. Thus, according to another embodiment of the invention, a more intelligent approach may be used. A more intelligent process for performing this step is described in more detail hereinafter.

After having segmented the attachment, the next step 46 is to stored the individual subdocuments in memory. The memory may be, for example, a cache or a database to expedite future interaction with the user. When the user follows a hyperlink on the first subdocument to access the next subdocument in the sequence, the request is forwarded to the proxy server 18, which responds, at step 48, with the appropriate subdocument, now stored in memory.

If the proxy server 18 is responsible for handling requests from many different clients, the proxy server may maintain state, at step 50, for each client to track which document the client is traversing and the constituent subdocuments of that document. As before, the proxy server 18 can use the HTTP header information-this time to determine a unique identification (IP address, for example, or a phone number for a mobile phone) for the client device, and use this code as a key in its internal database, which associates a state with each user. A sample excerpt from such a database appears below:

| User | State |
| --- | --- |
| 12345 | [subdoc 1] [subdoc 2] [subdoc 3] [subdoc 8] |
| 45557 | [subdoc 1] [subdoc 2] |
| 98132 | [subdoc 1] [subdoc 2] [subdoc 3] ... [subdoc 6] |

Many client devices cannot process documents coded in XML and can process only documents coded in another markup language, such as text, HTML, WML, HDML, or a proprietary language. Consequently, according to one embodiment, prior to responding to the client's request at step 48, the proxy server 18 may translate the XML subdocuments to the appropriate format for the client device. This translation could be done at the proxy server 18 by any available translator.

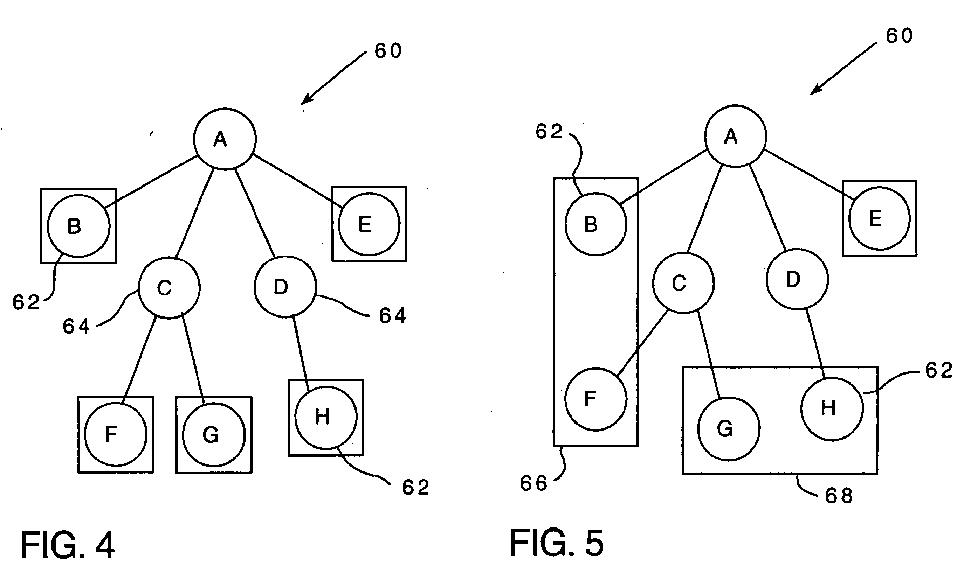

Figures 4 and 5 are diagrams illustrating hierarchical tree structures of an XML document 60, and illustrate an algorithm for computing an appropriate segmentation of the XML document. The leaves 62 of the trees represent elements of the original document such as, for example, text blocks, images, and so on. Internal nodes 64 of the trees represent structural and markup information such as, for example, markers denoting paragraphs, tables, hyperlinked text, regions of bold text, and so on. One strategy for accomplishing the segmentation task is to use an agglomerative, bottom-up leaf-clustering algorithm. The leaf-clustering approach begins by placing each leaf in its own segment (as shown in Figure 4) and then iteratively merging segments until there exists no adjacent pair of segments that should be merged. Figure 5 shows the same tree after two merges have occurred, leaving merged segments 66, 68.

Each merging operation generates a new, modified tree, with one fewer segment. Each step considers all adjacent pairs of segments, and merges the pair that is optimal according to a scoring function defined on candidate merges. An example scoring function is described below. When the algorithm terminates, the final segments represent partitions of the original XML tree.

In one example scoring function, a lower score represents a more desirable merge. (In this context, one can think of "score" of a merge as the cost of performing the merge.) In this example, the score of merging segments x and y is related to the following quantities:

1. The size of the segments: The scoring function could favor merging smaller segments, rather than larger ones. Let |x| denote the number of bytes in segment x. All else being equal, if |x|=100, |y|=150, and |z|=25, then a good scoring function causes score(x,z) < score(y,z) < score(x,y). The effect of this criterion, in practice, is to balance the sizes of the resulting partitions.

2. The familial proximity of the segments: All else being equal, if segments x and y have a common parent z, then they comprise a more desirable merge than if they are related only through a grandparent (or more remote ancestor) node. That two segments are related only through a distant ancestor is less compelling evidence that the segments belong together than if they are related through a less distant ancestor.

3. The node replication required by the merge: Internal nodes may have to be replicated when converting segments into well-formed documents. Of course, in partitioning an original document into subdocuments, one would like to minimize redundancy in the resulting subdocuments.

Defining d(x,y) to be the least number of nodes one must travel through the tree from segment x to segment y, and r(x,y) to be the amount of node replication required by merging segments x and y, then a general candidate scoring function is:

$$\text{score}(x,y) = A(|x|+|y|) + B(dx,y) + C(rx,y)$$

score(x,y) = A(|x|+|y|) + B(dx,y) + C(rx,y)
where A and B and C are functions (for example, real coefficients) which can be set by the user.
For example:

Algorithm 1:   Agglomerative segmentation of an XML document
Input:         D: XML document
               M: maximum permissible subdocument length
Output:        D': XML document with no less than ceil(N/M) leaves, each with a size no larger than M.

1. Assign each leaf in D to its own segment
2. Score all adjacent pairs of segments x" x2 in D with score (xi,x2)
3. Let x,y be the segment pair for which score(x,y) is minimal
4. If merging x and y would create a segment of size > M, then end
5. Merge segments x and y
6. Go to step 1

Other strategies could be used for scoring candidate segment merges.

The algorithm just described takes no account of the actual lexical content of the document when deciding how to segment. Other embodiments may use a criterion that takes into account the identities of the words contained in each segment and favors locations where a break does not appear to disrupt the flow of information. To accomplish this, the system must examine the words contained in the two segments under consideration for merging to determine if they pertain to the same topic. Such "text segmentation" issues are addressed, for instance, by automatic computer programs such as the one described in M. Hearst, TextTiling: Segmenting text into multi-paragraph subtopic passages, Computational Linguistics 23(1) 33-65, 1997. TextTiling is an algorithm designed to find optimal locations to place dividers within text sources.

The next step is to convert the segments of the final tree into individual, well-formed XML documents, for example. Doing so may require replication of nodes. For instance, in Figure 5, merging leaves B and F has the effect of separating the siblings F and G. This means that when converting the first and second segments of the tree on the right into well-formed documents, each document must contain an instance of node C. In other words, node C is duplicated in the set of resulting subdocuments. The duplication disadvantage would have been more severe if nodes F and G were related not by a common parent, but by a common grandparent, because then both the parent and grandparent nodes would have to be replicated in both segments.

The agglomerative segmentation algorithm (Algorithm 1, above) may be performed only once per source document, at the time the user first requests the document. As the user traverses the subdocuments comprising the source document, the computational burden for the proxy server 18 is minimal; all that is required is to deliver the appropriate, already-stored subdocument.

Once the segmentation of a document into subdocuments has been achieved, it is possible to use the subdocuments in a variety of ways other than simply serving them in the order in which they appear in the original document.

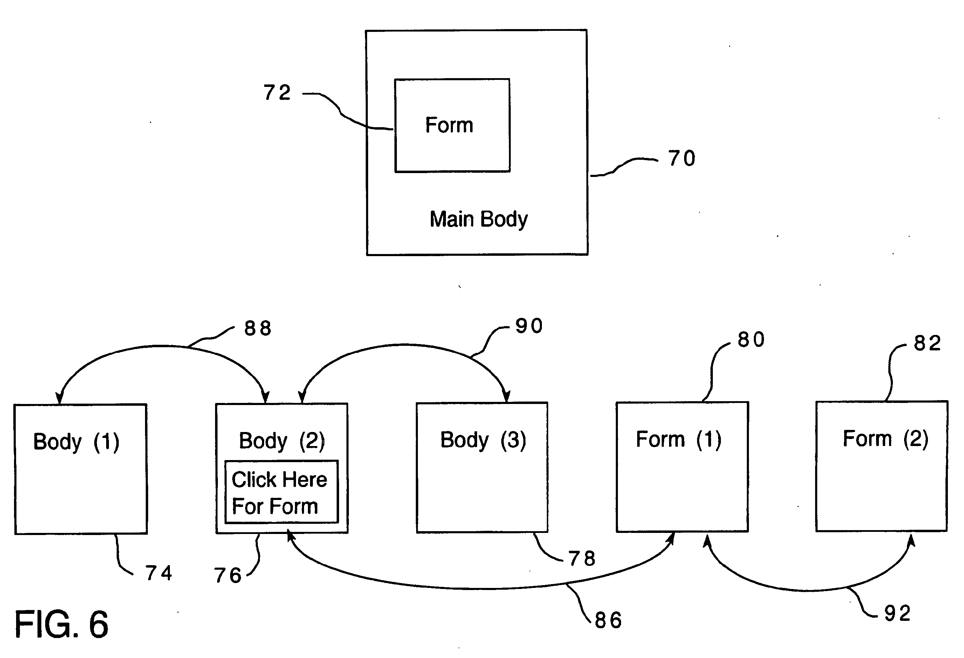

For example, as shown in Figure 6, an attachment document 70 may contain, for example, a form 72. In order to make the user's interaction with the page sensible, it may be useful to separate the form from the rest of the page and replace it with a link in one of the subdocuments. Then the user can invoke the link on his client device to have the form presented to him. If he prefers not to see or use the form, he can proceed to navigate through the other subdocuments as discussed earlier without ever getting the form.

For this purpose, the document 70 can be segmented into subdocuments 74, 76, 78 that represent parts of the main body of the document 70 and subdocuments 80, 82 that represent portions of the form 72. One of the subdocuments 76 may contain an icon 84 that represents a link 86 to the form. Other links 88, 90, 92 permit navigation among the subdocuments as described earlier.

The content of the e-mail body and attachment subdocuments that are served to the client device may be automatically transformed in ways that reduce the amount of data that must be communicated and displayed without rendering the information represented by the data unusable. Users can customize this automatic transformation of electronic documents by expressing their preferences about desired results of the transformation. Their preferences may be stored for later use in automatic customized transformations of requested documents.

For example, a user may wish to have words in attachment documents abbreviated when viewing the documents on a size-constrained display. Other users may find the abbreviation of words distracting and may be willing to accept the longer documents that result when abbreviations are not used. These preferences can be expressed and stored, and then used to control the later transformation of actual documents.

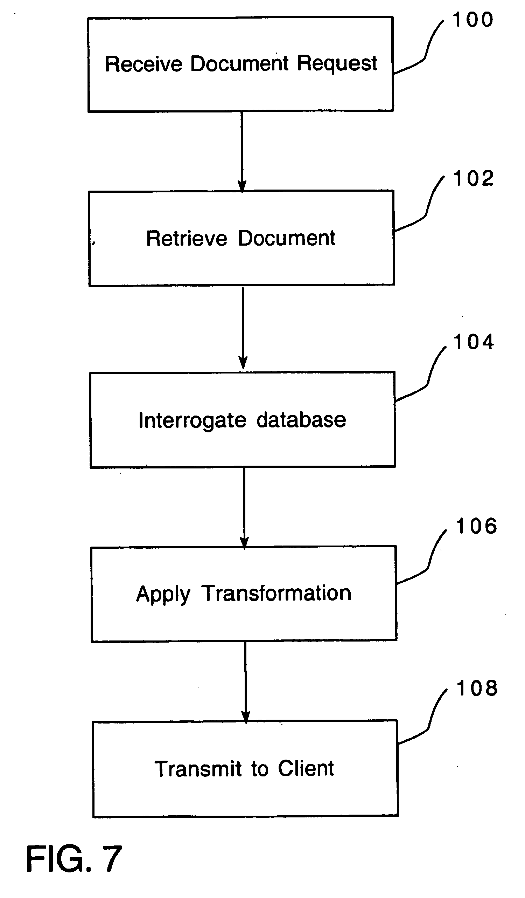

A process of transforming an attachment document into subdocuments according to user-defined preferences is now described with reference to Figure 7. As described earlier, when the user of the client device 12 requests a document, such as the body of an e-mail or an attachment to an e-mail (e.g., by selecting a link from an e-mail document), the proxy server 18, at block 100, receives the request and, at block 102, retrieves the document from the origin server.

After downloading the document from the origin server, the proxy server 18, at block 104, consults the database 28 of client preferences to determine the appropriate parameters for the transformation process for the client device 12. The proxy server 18, at block 106, may then apply the transformations to the document to tailor it for transmission, at block 108, to the client device 12.

For an embodiment in which the communication channel between the client device 12 and the proxy server 18 utilizes HTTP, the HTTP header in data sent from the client device 12 may include information that the proxy server 18 may use in appropriately formatting the document for the client device 12. For example, the HTTP header may include the following two relevant pieces of information:

1. A unique identifier for the client device. For example, for wireless Internet devices equipped with a microbrowser distributed by Phone.com, the HTTP header variable X-UP-SUBNO is bound to a unique identifier for the device.
2. The device type. For example, the HTTP header variable USER-AGENT is bound to a string that describes the type of browser software installed on the device.

When document transformation occurs, the proxy server 18 may use the unique ID for the client device 12 in the HTTP header as a key to look up, in the database 28, a set of preferences associated with the client. The following is an example of rows in a fictitious database 28.

| User | Word Abbreviations? | Images? | Max. Doc. Size (bytes) | Date Abbreviations? |
|------|--------------------|---------|------------------------|---------------------|
| 212-803-1234 | Yes | No | 2000 | Yes |
| 203-989-9345 | No | Yes | 16000 | Yes |
| 909-454-5512 | No | No | 1492 | No |
| 412-309-8882 | Yes | Yes | 1223 | No |

Each row identifies a client device by the device's telephone number. The row associates user preferences (four different ones in the illustrated embodiment) with the identified device. In this case, the telephone number (e.g., of a mobile phone) is the unique ID that serves as the key for the records in the database.

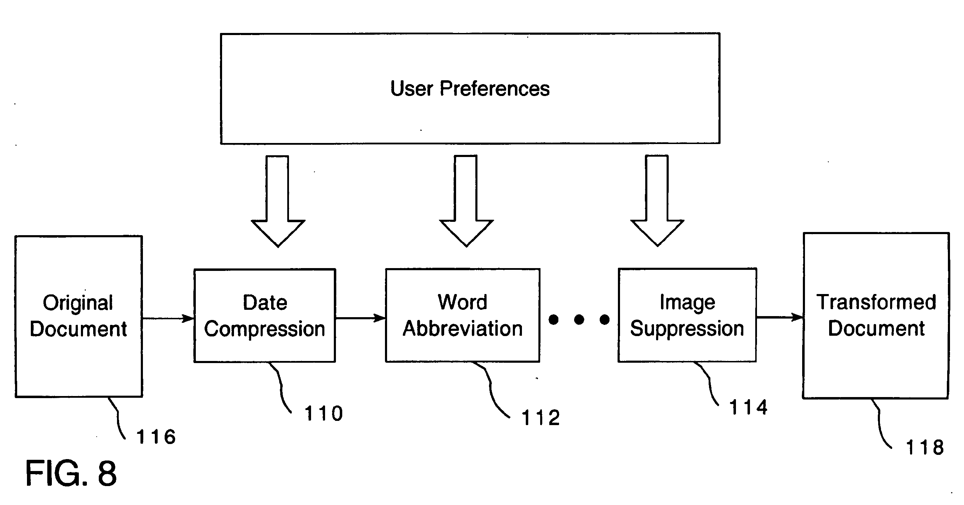

Having consulted the database to determine the appropriate preference values for this user, the proxy server 14 may use these values to guide its transformation process. Thus, as described earlier, the inputs to the transformation process are a source document (such as, e.g., e-mail body or a PDF file or a word-processing attachment) and a set of user preference values (e.g., one row in the exemplary database described previously). As shown in Figure 8, document transformation may include a sequence of operations such as, for example, date compression 110, word abbreviation 112, and image suppression 114, in converting an original document 116 to a form 118 more suitable for rendering on a small-display device. At every step, the preferences for the target client device may be used to configure the transformation operations. For instance, the client-specific preferences could indicate that word abbreviation should be suppressed, or that image suppression should only be applied to images exceeding a specified size.

In addition to being suppressed, images can be subjected to other kinds of transformations to reduce their size. For example, according to other embodiments, images may be compressed, downsampled, or converted from color to black and white.

Examples of user-configurable parameters include the following:

*Abbreviations*

To reduce the space required to display a document, words may be abbreviated. There are many strategies for compressing words, such as truncating long words, abbreviating common suffices (e.g., "national" becomes "nat'1"), removing vowels or using a somewhat more sophisticated procedure like the Soundex algorithm (Margaret K. Odell and Robert C. Russell, United States Patents 1,261,167 (1918) and 1,435,663 (1922)). According to one embodiment, the corresponding user-configurable parameter may be a Boolean value indicating whether the user wishes to enable or disable abbreviations. Enabling abbreviations reduces the length of the resulting document, but may also obfuscate the meaning of the document.

*Suppression of images*

Many small-screen wireless devices are incapable of rendering bitmapped images. Even when possible, rendering of large images may require lengthy transmission times. Bitmapped images are likely to degrade in quality when rendered on low-resolution screens. For these reasons, users may control whether and which kinds of bitmapped images are rendered on their devices. The corresponding user-configurable parameter in this case could be, for instance, a Boolean value (render or do not render) or a maximum acceptable size in pixels for the source image.

*Entity compression*

A transformation system can employ a natural language parser to detect and rewrite certain classes of strings into shorter forms. For instance, a parser could detect and rewrite dates into a shorter form, so that, for instance, "December 12, 1984" becomes "12/12/84", "February 4" becomes "2/4", and "The seventh of August" becomes "8/7". The corresponding user-selectable parameter value could be a Boolean value (compress or do not compress), or it could take on one of three values: do not compress, compress into month/day/year format, or compress into day/month/year format.

Similarly, a transformation system could parse and compress numeric quantities, so that (for instance) "seventeen" becomes "17" and "ten gigabytes" becomes "10GB."

A wide variety of other transformation could be devised for a wide variety of types of documents including, for example, compressing word endings (e.g., "education" becomes "educ'n"), applying acronyms (e.g., "hyper text transfer protocol" becomes "HTTP"), and number rewriting ("1,000,000" becomes "1M"). Additional transformations that may be employed include shrinking images in the attachment to fit the client device, and converting color images to black and white. In addition, the content of the attachment may be reorganized so it can be more easily accessed by the client device, as described further hereinafter.

A process for acquiring user-defined preferences is now described. According to one embodiment of the present invention, a user may enter and maintain preferences by visiting the proxy server 18 using the wireless device 12. The proxy server 18 could store a hypertext form that users of small-display client devices retrieve and fill in according to their preferences. Upon receiving a request from a client device, the proxy server 18 may automatically (using the HTTP protocol, for example) obtain the unique identifier for the client device. The proxy server 18 may then transmit to the user a form that contains a set of preferences. If the client device already has an associated entry in the database 28, the current value for each parameter can be displayed in the form; otherwise, a default value may be displayed. The user may change parameters on this form as the user sees fit and then submit the form back to the proxy server 18, which may store the updated values in the database 28 in the record associated with that client device.

Alternatively, the user may visit the same URL using a conventional web browser on a desktop or laptop computer. When this occurs, however, the proxy server 18 will be unable to determine automatically from the HTTP header information with which device to associate the preferences. As a result, the user may explicitly specify the unique identifier (phone number, for instance) of the client device for which the user wishes to set the preferences.

According to another embodiment, user-defined preferences may established using the HTTP "cookie" state mechanism (see e.g., D. Kristol and L. Montulli. RFC 2109: HTTP State Management Mechanism. (1997).**http://www.w3.or&rotocols/rfc21O9/rfc21O9.txt**). In this case, the preference information is not stored on a database remote from the client device, but rather on the device itself. The information flow of per-device preference information in this setting is as follows:

1. A user of a small-display device 12 submits a request to the proxy server 18 for the preferences form document. The form document is transmitted from the proxy server to the device.

2. The user fills in the user's preferences and submits the filled-in form back to the proxy server.

3. The proxy server responds with a confirmation document and also transmits in, for example, the HTTP header information to the client device, a cookie containing that user's preferences. For example, the cookie might look like:
Set-Cookie: PREFS=" abbrevs:yes images:no dates:yes ..."; path=/;
expires=04-Sep-O1 23:12:40 GMT

4. The client device stores this cookie as persistent state.

5. When a user of the client device subsequently requests a document from the proxy server, the device also transmits to the proxy server the cookie containing the stored preferences:
Cookie: PREFS=" abbrevs:yes images:no dates:yes ...";

6. Equipped with the preferences for this client, the proxy server applies these preferences in transforming the requested document. If the client device did not transmit a cookie, either because the cookie expired or was erased, the proxy server applies a default transformation.

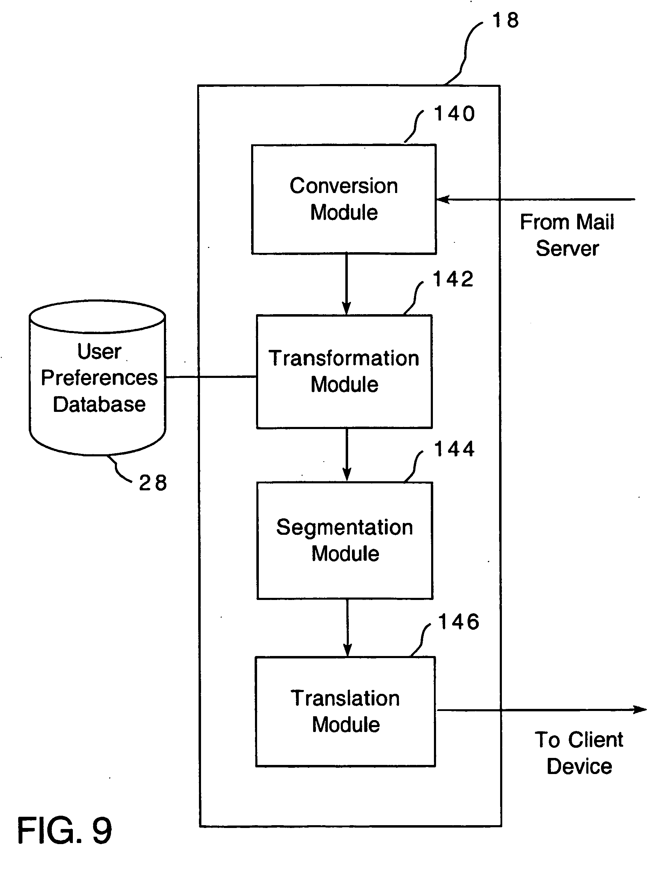

Figure 9 is a block diagram of the proxy server 18 according to one embodiment of the present invention. As illustrated in Figure 9, the proxy server 18 includes a conversion module 140, a transformation module 142, a segmentation module 144, and a translation module 146. The modules 140, 142, 144, 146 may be implemented as software code to be executed by the proxy server 18 using any type of computer instruction type suitable such as, for example, microcode, and may be stored in, for example, an electrically erasable programmable read only memory (EEPROM), or can be configured into the logic of the proxy server 18. According to another embodiment, the modules 140, 142, 144, 146 may be implemented as software code to be executed by the proxy server 18 using any suitable computer language such as, for example, Java, C or C++ using, for example, conventional or object-oriented techniques. The software code may be stored as a series of instructions or commands on a computer readable medium, such as a random access memory (RAM), a read only memory (ROM), a magnetic medium such as a hard-drive or a floppy disk, or an optical medium such as a CD-ROM. The modules 140, 142, 144, 146 may be distributed across more than one proxy computer device if necessary.

The conversion module 140 may receive the attachment from the mail server 14 and convert the attachment to an intermediate format, such as XML as described previously. The transformation module 142 may then condense the attachment document according to the user-defined preferences, which may be stored in the database 28, as described previously. The segmentation module 144 may then segment the attachment into the sub-documents according to, for example, the algorithms described previously. Upon a request from the client, the translation module 146 may then translate the appropriate sub-document to a format that is compatible with the client device, such WML, HDML, HTML, or a proprietary language, as described previously.

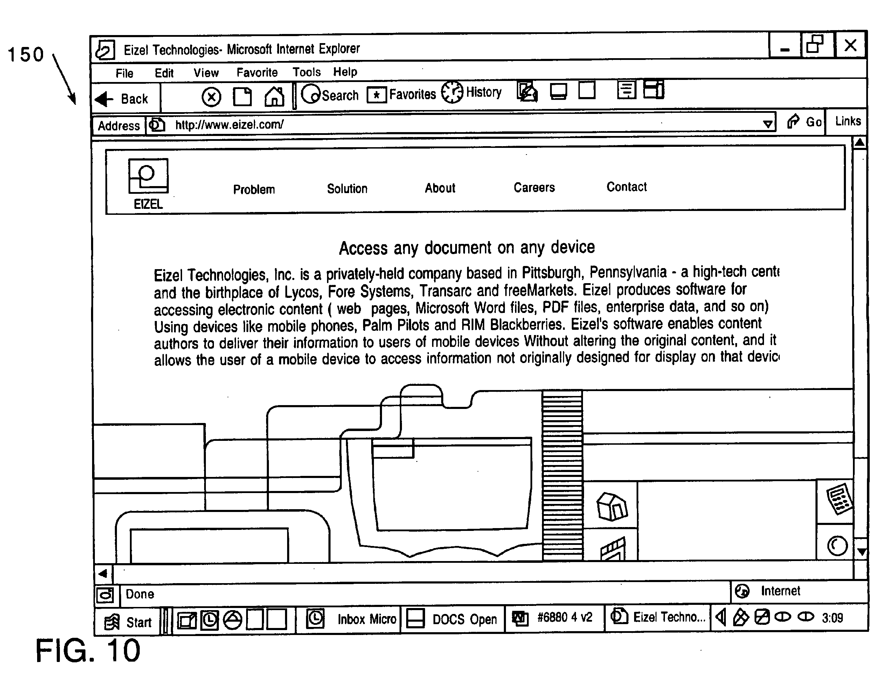

According to another embodiment, the proxy server 18 may also include a content reorganization module (not shown) for reorganizing the content of an attachment in an e-mail or a web page referred to by an embedded link in the e-mail to provide the content to the user in a more straightforward manner. With respect to this functionality, Figure 10 shows a typical commercial web page 150 having a complex, two-dimensional layout. Many people viewing this document on a traditional desktop computer display will first notice the content beginning with "Access any document on any device." However, this content does not appear at the beginning of the source HTML document that underlies the displayed version. Rather, the banner and navigation links precede the story in the source HTML.

If the source HTML document were transmitted in its original order to a small-screen client device, the user would have to navigate through a considerable amount of secondary content before reaching the primary content. For example, the content pertaining to the story "Access any document on any device" may not appear until the third sub-document.

Users of small-screen devices, such as WAP phones, typically prefer not to have to wade through information of secondary importance before reaching the information of interest to them. Therefore, according to one embodiment, the content reorganization module may insert a link at the beginning of the first subdocument that links directly to the main content. For example, if the main content is on the third sub-document, the first sub-document may have a link to the third sub-document captioned, for example, "Main Content."

According to another embodiment, the content reorganization module may reorder the original document, so that the main content appears first (in the source for the first subdocument).

According to another embodiment, the content reorganization module may provide an internal annotation to the subdocument containing the beginning of the main content and cause the display device to start directly at this subdocument when the user requests the document.

Another difficulty faced by those viewing documents using non-traditional media occurs when the original document includes, for example, a table next to a body of related text. According to one embodiment, such interrupting blocks can be identified and moved so they appear after, rather than in the midst of, the adjacent text. After rearrangement, the content becomes more accessible on linearly-formatted media such as small-screen handsets.

In some implementations, one or more of the following operations (which can be thought of as subroutines) are applied to an input document (such as a hypertext document in HTML, XML, text, Microsoft Word, or another format). The output is a document whose content has been altered to allow for easier access through non-traditional media.

The following describes functions to be performed by a restructuring algorithm.

*Annotate the beginning of the main content*

The annotation is a single node inserted into a tree representation of the document (see Figures 4 and 5) at the place where it is determined that the central content of the document begins. Methods for determining where the main content begins include:

1. Use, if present, a document author's annotation; and
2. Calculate the location of the beginning of the main content using the algorithm described below.

Using this information, any of the three approaches mentioned earlier may be implemented: inserting a link from the beginning of the first subdocument to the beginning of the main content; reordering the document so the main content moves to the beginning of the first subdocument; or directing a user immediately to the beginning of the main content.

*Annotate the scope (start and end) of atomic groups in the document*

By "atomic group" it is meant a group of sibling nodes within a document tree that should not be separated. For instance: (a) a headline should not be separated from the subsequent story, (b) a picture should not be separated from an accompanying caption, and (c) a sequence of paragraphs comprising a body of text should not be separated from one another.

The purpose of identifying and annotating "atomic" blocks within the HTML code is to ensure that if content in a document is rearranged, the rearrangement does not violate the coherence of the content of the document.

*Classify subtrees within the document tree as movable or not*

Certain subtrees within a document tree-tables, table rows, table cells, and image maps-can be migrated within the document without disrupting (often improving, in fact) the narrative flow of the document. Elements that are not movable include paragraphs within a larger text block and images adjacent to a caption. Moving them would disrupt the narrative flow of the document.

*Move elements that interrupt a body of text to locations outside the text body*

As described earlier, punctuating a body of text with a related picture or table is a stylistic device often used by document authors and publishers. But such interruptions are often disruptive when the document must be conveyed in a linear manner. Therefore, these types of "accompanying" elements, when marked as movable, are demoted to the end of the text block.

*Regions in the document are classified according to function*

Regions in the documents may be classified into one of a number of categories, such as those listed in Table 1 below:

**Table 1**

| Template content | Narrative content that is generic or not related to the rest of the document (e.g. the copyright information, or information related to the revision history of the document.) |
|---|---|
| Default | The default or "catchall" category |
| Input/form-related | Elements related to transactions (forms, buttons, input text blocks, etc.) |
| Generic Navigation | A set of links with short labels whose purpose is to provide easy access to other documents. |
| Content Navigation | Navigational aids (links) which also contain information. |
| Content | Narrative content which appears to be unique to the document |
| Organizational Navigation | A set of intra-document links which point to parts of the current document as an aid in navigating the document. |

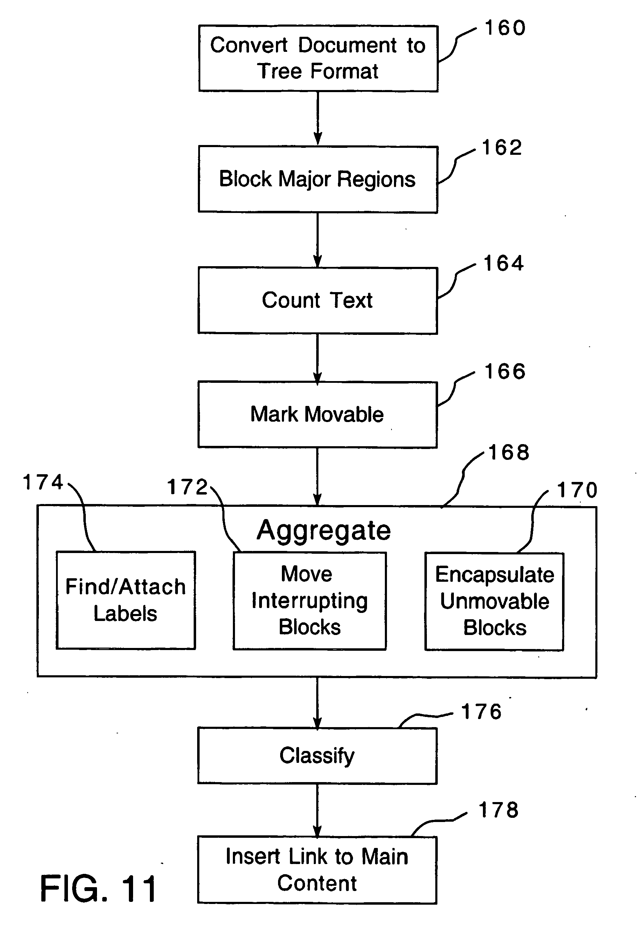

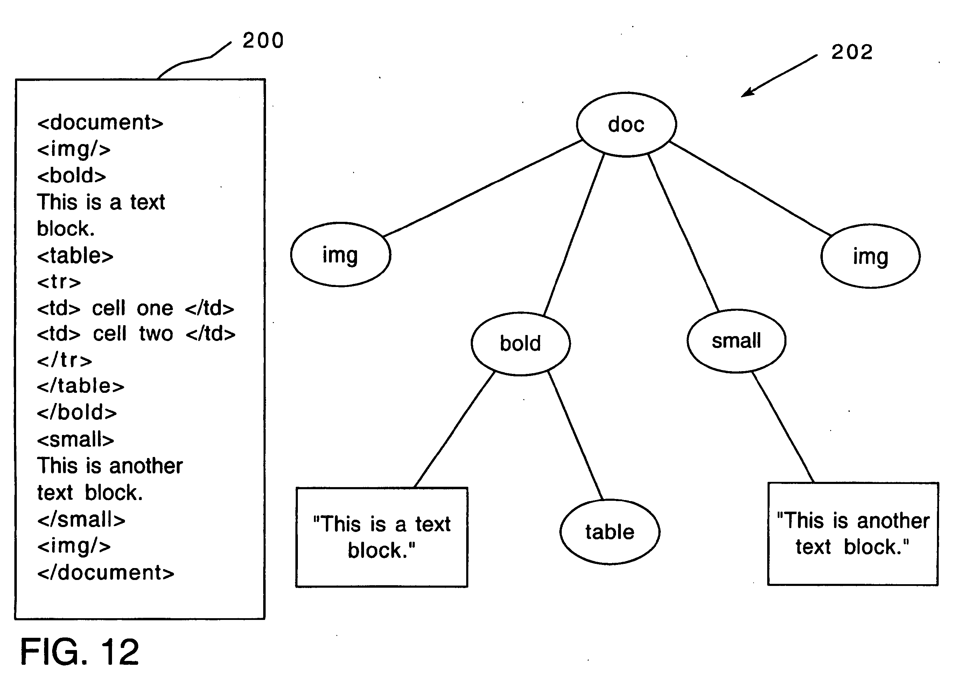

Figure 11 is a chart of the process flow for reorganizing the content of the e-mail attachment or web page referred to by an embedded link in an e-mail according to one embodiment of the present invention. The process initiates at block 160 where the document (e.g., attachment or web page referred to by embedded link), in an arbitrary format, is converted to a common internal tree-based representation. The representation may be described using, for example, the DOM (Document Object Model) markup language, described in Document Object Model (DOM) Level 3 Core Specification, Version 1.0 http://www.w3c.org, but other formats are possible. For documents in some markup languages there exist publicly-available tools for performing this conversion such as, for example, The Tidy Project: http://www.w3.org/People/Raggett/tidy/, but for documents in other markup languages, the conversion routine must be created *de novo*. Figure 12 shows an example of a simple HTML source document 200 and a corresponding tree-based representation 202 (with the subtree underneath the table node omitted for clarity).

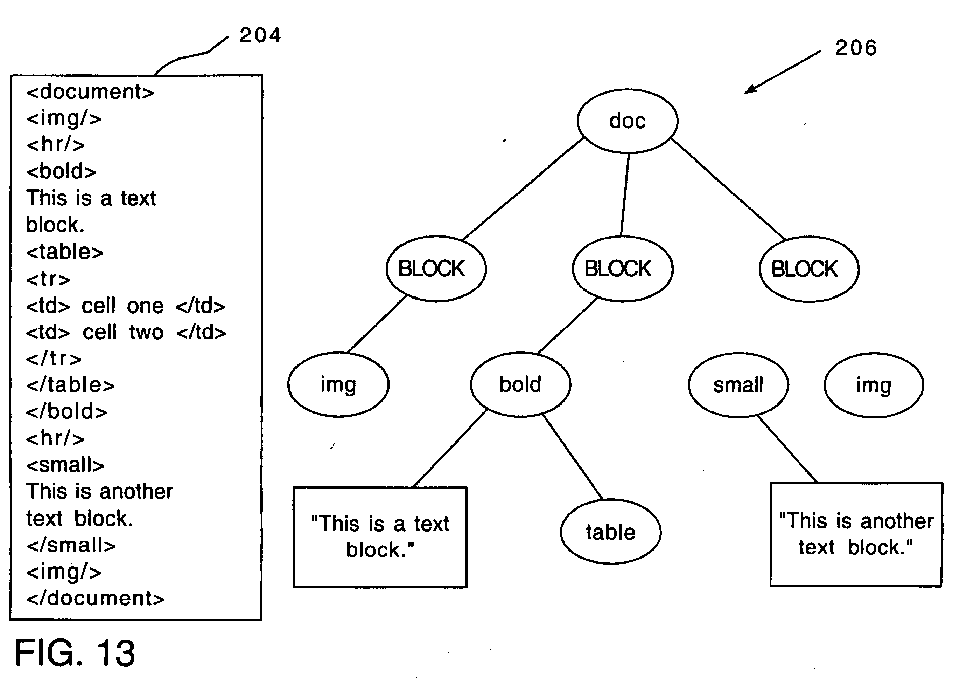

In the interest of clarity, long documents often include (implicitly or explicitly) information that demarcates major regions from one another. HTML authors, for instance, often use <hr> tags to separate regions; this tag typically appears as a thin line extending the entire horizontal span of the screen. HTML authors also sometimes use the <frame> tag to distinguish separate regions. In common word-processing formats such as Microsoft Word, the beginning of a new chapter or section serves to distinguish major regions. In presentation software such as Microsoft PowerPoint, separate slides represent different regions. Referring again to Figure 11, at block 162, each major region explicitly demarcated in some way in the original document is identified and a BLOCK node is inserted in the document tree. The BLOCK node encapsulates the region, which exists as a subtree underneath the BLOCK node. Later processing will make use of this additional structural information in the document tree. Figure 13 shows an example in which an HTML source document 204 having its first two regions demarcated by <hr/> tags is represented by three block nodes in the tree representation 206.

Returning to Figure 11, the count text step 164 counts the number of text characters within (and underneath) each node in the document tree. Although a document tree such as the one in Figure 13 contains many characters, only those characters that will be displayed by a rendering agent (a web browser, for instance) are counted in this step. These text block characters are subsequently referred to herein as "printable characters," distinguishing them from characters comprising element names ("img" and "bold" and "table", for instance).

Having counted printable characters, this step annotates each node with the number of printable characters within the subtree rooted at that node. This value is referred to as the text size of the node.

The mark movable step 166 identifies movable elements-elements that can be moved within the tree. The actual moving of nodes occurs later, but nodes typically will only be moved within their sibling set: the set of nodes which share the same parent in the tree. That is, a node generally is not promoted or demoted to a different level in the document tree.

Tables, table rows, table cells, image maps, and blocks generated at block 162 (block major regions) are all movable. Individual paragraphs adjacent to other paragraphs are not movable, because moving one without the other could disrupt the correct ordering of text.

The aggregate step 168 encapsulates consecutive nodes in the tree that are acting as a functional unit. In this sense, it performs a function similar to block 162, except that the aggregate step operates at a finer level of granularity in the document tree.

This step achieves two main goals:

1. Protect groups of nodes within a document that are likely to have a similar purpose and should be kept together-groups of nodes that should not be rearranged, such as a sequence of paragraphs comprising a body of text.
2. Identify small nodes (typically but not exclusively textual) that act as labels for subsequent larger nodes, and protect against the later separation and rearrangement of these label/body pairs.

The aggregate step 168 may itself be broken into three subroutines 170, 172, 174. These three steps may be performed in sequence on each node in the document tree which has children.

The encapsulate unmovable blocks subroutine 170 establishes the following invariant in the document tree, maintained through the rest of the processing steps: *If one of a node's children is movable, then all the children are movable*.

To establish this invariant, this step finds contiguous sequences of unmovable nodes that are movable as a block, and encapsulates them inside a BLOCK, which is marked as movable. According to one embodiment, an algorithm for this step is:

*EncapsulateUnmovable(Node, n)*

1. If n is not movable, then return
2. If none or all children of n are movable, then return n
3. Encapsulate (put underneath a BLOCK node) each contiguous sequence of unmovable child nodes of n

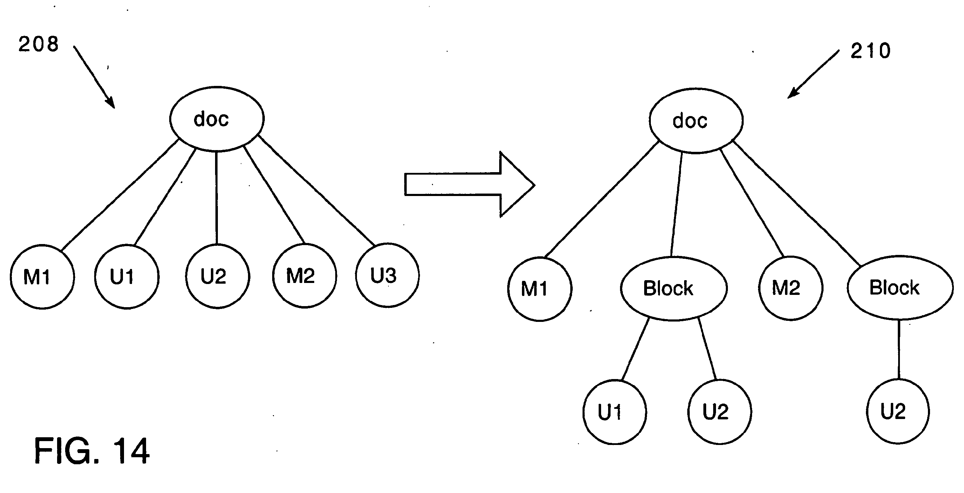

Figure 14 provides an example of a tree before 208 and after 210 the packaging of unmovable nodes.

With respect to block 172 of Figure 11, as previously explained, an "interrupting block" is a set of elements that "interrupt" a body of textual content to provide an illustrative picture, supporting information, or in some cases a survey requesting feedback on the text. If not moved out of the way (by demoting them so they appear after, rather than during, the body of text), these interrupting blocks would disrupt the flow of the text within a linear presentation of the document.

According to one embodiment, interrupting blocks in an HTML document may be identified by looking for tables with the attribute align set to left or right. When found, the table is demoted so it appears after the last of its siblings that contains the adjacent text.

By performing this move interrupting blocks step 172 on a node *n's* children immediately before the label attachment step 174 of *n's* children, label attachment becomes much more accurate and easy to implement. Because labels and their bodies are determined by sizes of siblings, moving blocks that are to be moved anyway creates a single homogenous body instead of being separated across several disjoint regions.

The find/attach labels step 174 identifies nodes that act as labels for their successors. For instance, a headline acts as a label for the following story, and the two should not be segregated. One algorithm to accomplish this, shown below, begins by calculating a threshold value for each child of a node. That value is the geometric mean of the smallest text size and largest text size among the children. All siblings whose text size exceeds this threshold are labeled as LARGE, and the rest as small. The notion of LARGE and SMALL are thus relative to a set of siblings.

*ClassifySiblingsByRelativeSize(Node n)*

1. Classify each child of n as SMALL or LARGE as follows:

    a. Set min = minimum text size of all children of n
    b. Set max = maximum text size of all children of n
    c. Do for all children c of n:

        i. Set x = text size of c
        ii. If $x < (min * max)^{1/2}$ then classify c as SMALL else classify c as LARGE

2. Encapsulate each consecutive sequence of SMALL children of n within a BLOCK, labeled as SMALL
3. Encapsulate each consecutive sequence of LARGE children of n within a BLOCK, labeled as LARGE

Steps 2 and 3 encapsulate similarly labeled siblings. Often this step captures many consecutive subtrees, such as, for example, a headline followed by a byline followed by a brief synopsis of the upcoming story. Connecting similarly labeled blocks ensures that the entire label and the entire block move as a unit, avoiding a separation of related blocks.
After these three steps, the following algorithm may be used to attach labels to bodies.

*AttachLabels(Node n)*

1. Do for each consecutive pair of (SMALL, LARGE) siblings among the children of n:

    a. Let |x| = text size of node x
    b. Let |y| = text size of node y
    c. If |x| < |y|/3, then encapsulate (x,y) within a BLOCK

Step 1c is a heuristic (and the value 1/3 is a suggested value, which may not be optimal for certain classes of documents) designed to identify when a subtree is acting as a label to a subsequent block. The labeling strategy here is conservative, because the ramifications of mistakenly identifying a subtree as a label are small (merely that the subtree will never be separated from the subsequent block).
The classify step 176 classifies each node in the document tree into one of a fixed number of categories. The following exemplary table reiterates the list of the categories provided earlier and associates each category with a label, referred to in subsequent algorithms.

| | |
|---|---|
| Template Content | TEMPLATE_CONTENT_BLOCK |
| Default: | DEFAULT_BLOCK |
| Input/Form Related: | FORM_BLOCK |
| Generic Navigation: | GENERIC_NAV_BLOCK |
| Content Navigation: | CONTENT_NAV_BLOCK |
| Content: | CONTENT_BLOCK |
| Organizational navigation: | ORG_NAV_BLOCK |

The following algorithm contains an example classification procedure, designed for HTML documents. The return value is an integer priority, corresponding to the table of categories above.

```
int classify(Node n) {
        // A list of HTML tags which are input/form-related. Other markup
        // languages will have different tags.
        1.    formElementSet =
        {FORM,INPUT,BUTTON,TEXT_AREA,SELECT,OPTION,OPTGROUP
,
        FIELDSET,LABEL};
        2.    if (formElementSet.contains(n)) return FORM_BLOCK;
```

```
      // There is no printable text within this subtree
3.    if (n.textSize = 0) return DEFAULT_BLOCK;
      // Among all characters appearing in this subtree, what fraction
      // appears inside links and forms?
4.    double inLinkRatio =
(n.textSizeInLinks + n.textSizeInForms) / n.textSize;
      // The ratio of printable characters to links within this subtree
5.    double textToLinkRatio = n.textSize / n.nLinks;
      // This subtree contains links, a high percentage of characters
      // inside links and forms, and a high percentage of same-site links.
      // Note: n.nInDocLinks = # of links within the subtree rooted
      // at node n which point elsewhere in the same site.
6.    if (n.nLinks > 0 &&
   (inLinkRatio > 1/2 && (n.nlnDocLinks / n.nLinks > 2/3)))
      return ORG_NAV_BLOCK;
      // Test for content / template content
7.    if (inLinkRatio < 1/2 && (n.nLinks == 0 || textToLinkRatio > 50))
      if (n contains the word "copyright") return
TEMPLATE_CONTENT_BLOCK;
      return CONTENT_BLOCK;
      }
      // There are no links within this subtree, or the ratio of text
      // to links is very high
8.    if (n.nLinks == 0 || textToLinkRatio > 30)
      return CONTENT_NAV_BLOCK;
      // base case
9.    return GENERIC_NAV_BLOCK;
      }
```

Step 7 contains an overly simple heuristic-check for the word "copyright"-for determining whether a content block is actually template content. In practice, a more reliable test for template content would involve applying a text classification procedure, such as the Naïve Bayes classifier, to the task of distinguishing the two categories. A description of the Naive Bayes classifier algorithm is provided in Lewis, D., "Naïve (Bayes) at Forty: The independence assumption in information retrieval," Proceedings of the European Conference on Machine Learning, 1998, which is incorporated herein by reference. Applying a machine-learning technique such as Naive Bayes requires a large collection of text blocks, each annotated with the correct label (CONTENT or TEMPLATE CONTENT), so the algorithm can "learn" to distinguish the two categories.

In practice, the above heuristic works well for most HTML documents, including those from websites with large, complicated pages that need to be distilled for lightweight devices. The algorithm above is also independent of the language or words that are being used. In addition to being portable to other languages, this technique is also fast compared to one that would need to do content analysis.

At block 178, according to one embodiment, a link to the main content of the document is inserted in the first sub-document. As described previously, according to other embodiments, this step may include, for example, reordering the content to, for example, place the main content in the first sub-document, or inserting at the main content. Before describing these embodiments, a node-comparison routine that may be shared among these steps is described.

The node comparison function places an ordering on the nodes by their classification. According to one embodiment, the CONTENT classification may have a high priority, though not as high as ORG_NAV. Organizational navigational content is by definition a block that must precede the content because the hyperlinks within it point to places further down the tree. For instance, some links of commercial web pages act as a table of contents to the main content and could be quite useful to a user of a lightweight device.

In cases where two nodes are both labeled as CONTENT blocks, the "block density" may be used to break the tie. To define block density, the Squared Block Size (SBS) may be defined as:

For all terminal blocks nodes:

if (node is CONTENT) $SBS = textsize^2$

Else $SBS = 0$

For all other nodes:

$SBS =$ Sum of all childrens' SBS values

Block nodes are those nodes that are elements that are considered block elements by the HTML specification. These elements can be thought of as not being able to occur on the same line with any other element. Examples are P, CENTER, DIV, BLOCKQUOTE, TD, etc. A terminal block is one that has no blocks underneath it.

The block density can be defined as:

$$D(a) = SBS \text{ of } a \text{ / (\# of terminal movable blocks under } a)$$

More specifically, the "density" is the average SBS value for the terminal movable blocks under it. If there are two subtrees a and b, each containing 100 characters, but subtree $\alpha$'s characters all appear within a single node whereas b's characters are interspersed among many nodes, then subtree a is denser. The intuition here is that denser nodes are likely more descriptive (because their blocks are longer).

The comparison algorithm therefore may be:
*CompareSiblings (Node a, Node b)*

  1. If (type of *a* != type of *b*) then return node of higher priority
  2. Return whichever node has the higher D-value

For an embodiment in which a link to the main content is inserted at block 178, the following algorithm may locate the "main" CONTENT block in the document, and insert a link from the beginning of the document to this block.
*InsertLink*

  1. Set n = node at root of document tree
  2. while (n is not a terminal cell AND n.textsize > K)
  3. if n has CONTENT block descendents then
  4. Set n = child CONTENT block with the highest D-value
  5. else break
  6. // iterate back up the tree
  7. while (n's previous sibling == LABEL OR n has no previous sibling)
  8. n = n's parent
  9. If there are more than M printable characters between the start of the document and n, then a link may be inserted from the top of document to node n

In other words, the algorithm may include walking down the tree while the nodes have at least K printable characters until a terminal cell is reached; at each level of the tree traversing the "best" content block. (The value of K is an adjustable parameter. According to one embodiment, K may be 400.) Once this is found, it may be ensured that a label would not appear right before the block in an in-order traversal (since that label would likely be part of the main content).

The value of M dictates how far from the beginning of the document the detected main content must reside before the algorithm will bother to insert a "jump to main content" link at the top of the first subdocument. It would make little sense, for example, to insert a "jump to main content" link when the main content is only three lines from the start of the transformed document.

For an embodiment in which the content is instead reordered at block 178, the reorder step may include recursively sorting the children of each node in the document tree. Before explaining one embodiment of this the sorting procedure, a definition of a "protected" node is provided:

A node in a document tree is protected if its children are not movable, or if the subtree rooted at that node contains fewer than some predetermined number of characters N, or if the node was marked a label or body of a label earlier.

"Protected" nodes are nodes into which the recursive sorting algorithm does not descend. According to one embodiment, $N$ was set to 400.

Recall that the Encapsulate Unmovable Blocks step has previously ensured that either all or none of a node's children are movable.

The end result of the sorting procedure is a transformed tree in which the following holds: if a set of sibling nodes is movable, these nodes are ordered (from left to right) by decreasing likelihood of containing content.

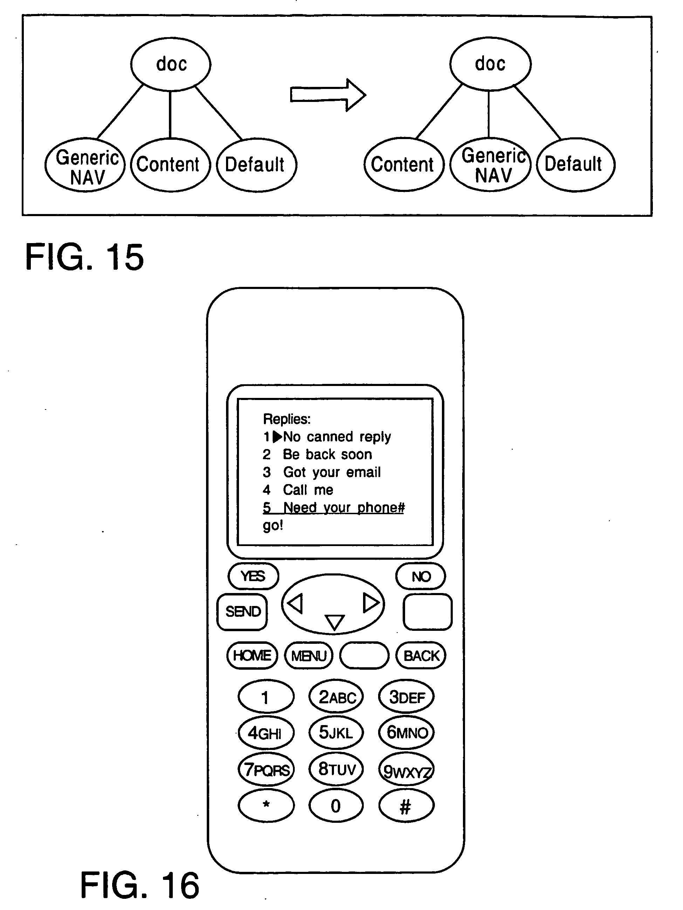

Figure 15 shows an example of the sorting process applied to three children of a "document" node according to one embodiment. The sorting procedure is straightforward. Each node in the tree already has been assigned a category (in the Classify step). Nodes are sorted according to the ranking of categories given previously. If the two nodes belong to the same category, the sorting algorithm may break the tie by preferring the node that contains a "denser" presentation of information.

A recursive node sorting algorithm built on top of this node-comparison routine is straightforward, and according to one embodiment may include:

*RecursiveSort*

1. Set $n$ = root node of document tree
2. If $n$ is not protected, then

    a. Sort children of $n$ with *CompareSiblings* algorithm
    b. Call *RecursiveSort* on each child of $n$

3. Return $n$

The above algorithms calculate the location of the beginning of the main content in a hypertext document. In some cases, this work isn't required. For instance, the author of a hypertext document may insert an annotation into the document to indicate where the main content begins.

The previous discussion relates generically to hypertext documents, such as web pages and corporate intranet documents, that may be attachments to an e-mail or referenced by an embedded link in an e-mail. Similar principles can be applied to hypertext-encoded email messages. In addition, email documents, both hypertext-encoded and non-hypertext encoded, have some particular characteristics not found in general hypertext documents that an automatic content rearrangement system can exploit for the purpose of reorganization. These characteristics present the opportunity for document reordering and prioritization for purposes of presentation.

The following is an example of a rather "generic" email.
Return-Path: bovik@eizel.com
Received: from mail.eizel.com (mail.eizel.com [122.42.14.121]) by eizel.com (8.9.3/8.9.3) with ESMTP id KAA07391;
Sun, 18 Mar 2001 10:48:06 -0500 Mime-Version: 1.0
At 8:22 AM -0500 3/17/01, John Doe wrote:
>The latest revisions look good to me. Let's move ahead with
>this project. Please fax me your itinerary next week
>at 214-987-3334.
John,
I seem to have lost the itinerary. I'll try to get my assistant to write up a new itinerary and I'll fax it to you as soon as possible.
Harry

The following categories may be used for the body of an e-mail message:

HEADER_BLOCK: The initial set of lines, beginning with a token which ends in a colon.
INCLUDED_MESSAGE: An email or part thereof prefaced by ">" or "|" or another indicative character. This also includes an optional preceding line(s), containing text such as "At [time], [person] wrote:"
MAIN_BODY: The content of the message itself.

Standard parsing algorithms can classify a line from an email, with high accuracy, into one of these categories. (In one example, the parser will have at least a one-line look-ahead buffer.)

The main content, in this case, will be at the beginning of the main body. In the example provided, this is the line which reads "John,". Given this classification, an automatic document restructuring system can apply the same policies--reorder the content, start at the main content, or insert a link to the main content--to an email document.

As discussed previously, the process, according to one embodiment of the present invention, for fetching an e-mail for a device of limited rendering capability may include:

1. User of the client device indicates a desire for an e-mail message M.
2. The request for M is transmitted from the client device to the proxy server using, for example, the HTTP protocol.
3. The proxy server fetches the e-mail M from the mail server using, for example, one of the common mail transport protocols, like POP3 or IMAP. On the proxy server now resides an entire, "pristine" version of the original e-mail, including any attachments.
4. The proxy server retargets the e-mail for delivery to the client device. This may include, for example, compression of words and/or phrases, rearranging content, and/or breaking the body and attachments into segment. Moreover, as discussed previously, this may be performed using user-defined preferences.
5. The proxy server delivers the first segment of the e-mail body to the client device. This first segment may include a link to the next segment. The end of the e-mail body may contain a set of links, each corresponding to one of the attachments of the original e-mail.

Thus, the proxy server may segment the e-mail into several parts, comprising one or more parts comprising the body of the e-mail, and/or one or more parts corresponding to each attachment to the e-mail.

For an embodiment in which the end of the e-mail body includes a set of links, each link corresponding to a single attachment from the original e-mail, invocation of one of the links by a user of the client device may cause the proxy server to transform (e.g., compress, segment, reorder, etc., as discussed previously) the appropriate attachment for display on the client device. According to such an embodiment, the proxy server may perform what may be considered "lazy" attachment handling. That is, the proxy server does not process the attachment unless explicitly requested by the client device. This type of attachment handling may be advantageous in reducing the computational load on the proxy server and also reducing bandwidth requirements.

According to another embodiment of the present invention, the system 10 may allow users to register multiple client devices and to correspondingly check their e-mail using any of the registered devices. According to one embodiment, the proxy server may store in the database a number of client devices D1, D2, D3 associated with a particular user. The proxy server may also store the address of the mail server S for the user as well as the appropriate password. Thus, when the proxy server detects a request for e-mail from any of these devices D1, the proxy server may download the mail from the appropriate mail server S on behalf of the user and transform (e.g., compress, segment, reorder, etc., as discussed previously) the e-mail for deliver to the appropriate client device D1.

Accordingly, the proxy server, which mediates between the client device and the mail server, may perform a number of state management duties. As discussed previously, these duties may include (i) handling attachments longer than the length of a document accepted by the client device, (ii) managing user-defined preferences, and (iii) allowing multiples devices for a single user. In addition, as discussed previously, for e-mail having multiple parts, the proxy server may store on behalf of the client device all the constituent parts of the e-mail, delivering each part on demand from the client.

According to another embodiment, the proxy server 18 may also include a response template module (not shown). The response template module may add one or more additional segments to the e-mail sent to the client device that provides the user of the client device with a response template. The user may select a reply from the template via a key on the client device, for example, that initiates a return e-mail to, for example, the sender of the original e-mail with a message corresponding to the selected choice of the template. For example, as illustrated in Figure 16, the template may include the following messages:

1. No canned reply
2. Be back soon
3. Got your email
4. Call me
5. Need your phone #

The user of the client device may select the desired return message by, for example, pressing the corresponding key on the client device keypad. Upon activation of the "go!" command, according to the illustrated example, an e-mail message with the message is then transmitted to the sender of the original e-mail. The response template module may provide the client device with the appropriate response template based in the ID # of the client device, which may be provided in the HTTP header in communications sent from the client device, as described previously herein. That is, according to one embodiment, the template response module may select the appropriate template for a particular client device from a database (not shown) based on the ID # for the client device. Such a response template may facilitate the user of, for example, a client device with a limited keyboard in responding to the e-mail.

Although the present invention has been described herein with respect to certain embodiments, those of ordinary skill in the art will recognize that many modifications and variations of the present invention may be implemented. For example, steps in certain of the algorithms and/or process flows described herein may be performed according to different sequences. The foregoing description and the following claims are intended to cover all such modifications and variations.

**Claims**

1. A method for converting an attachment (30) in an e-mail (24) for delivery to a client device (12) of limited rendeting capability, comprising:

   downloading the e-mail and the attachment in response to a request (20) from a client device for the e-mail; transforming the attachment into a plurality of sub-documents (32), each sub-document being expressed in a format that is compatible with the client device and being a size not greater than a maximum rendering size capability of the client device, wherein a first sub-document includes a link (34) to a second sub-document; and serving the first sub-document to the client device.

2. A method according to claim 1, further comprising:

   serving the e-mail to the client device, the e-mail including a link to the attachment; and receiving a request from the client device corresponding to an invocation of the link for the attachment,

   wherein transforming the attachment into the plurality of sub-documents is performed after receiving the request from the client device corresponding to the invocation of the link for the attachment.

3. A method according to claim 2, further comprising:

   downloading the e-mail and the attachment in response to receiving the request for the e-mail and the attachment from the client device; and storing the e-mail and the attachment.

4. A method according to claim 3, wherein storing the e-mail and the attachment is performed prior to transforming the attachment.

5. A method according to any preceding claim, further comprising serving the second document to the client device in response receiving from the client device an invocation of the link to the second sub-document.

6. A method according to any preceding claim, further comprising altering a portion of text of the attachment based on preferences associated with the client device.

7. A method according to claim 6, wherein the step of altering a portion of text of the attachment is performed prior to transforming the attachment into a plurality of sub-documents.

8. A method according to any preceding claim, wherein:

   downloading the attachment includes downloading an attachment that is expressed in a first format that is incompatible with the client device; and transforming the attachment includes:

      transforming the attachment to a second format; segmenting the attachment into the plurality of sub-documents; and transforming the first sub-document to a third format that is compatible with the client device prior to serving the first sub-document to the client device.

9. A method according to claim 8, wherein transforming the attachment to a second format includes transforming the attachment to XML.

10. A method according to claim 9, wherein transforming the first sub-document to a third format includes one of transforming the first-subdocument to WML, transforming the first-subdocument to HDML, and transforming the first-subdocument to HTML.

11. A method according to any one of claims 8 to 10, wherein:

transforming the attachment to a second format includes transforming the attachment to a second format that includes a hierarchy of segments; and
segmenting the attachment into a plurality of sub-documents includes assembling the sub-documents from the segments.

12. A method according to claim 11, wherein assembling includes assembling the sub-documents from the segments according to an algorithm that favors assembling each of the subdocuments from segments that have common parents in the hierarchy.

13. A method according to claims 11 or 12, wherein assembling includes assembling the sub-documents according to an algorithm that favors balancing respective sizes of the sub-documents.

14. A method according to any one of claims 11 to 13, wherein assembling includes assembling the sub-docnments from the segments according to an algorithm that favors assembling each of the sub-documents from segments for which replications of nodes in the hierarchy is not requited.

15. A device for converting an attachment (30) in an e-mail (24) for delivery to a client device (12) of limited rendering capability, comprising:

a conversion module (140) for converting the attachment to an intermediate format;
a segmentation module (144) for segmenting the attachment into a plurality of sub-documents (32), each sub-document being a size not greater than a maximum rendering size capability of the client device, wherein a first sub-document includes a link (34) to a second sub-document; and
a translation module (146) for translating one of the sub-documents to a format that is compatible with the client device for serving to the client device.

16. A device according to claim 15, further comprising a transformation module for altering a portion of text of the attachment based on preferences associated with the client device.

17. A device according to claims 15 on 16, further comprising a content reorganization module for reorganizing content in the attachment.

18. A device according to any one of claims 15 to 17, further comprising a response template module for serving to client device a sub-document including a response template for responding to the e-mail.

**Patentansprüche**

1. Verfahren zum Konvertieren eines Anhangs (30) in einer E-Mail (24) zur Auslieferung an eine Client-Vorrichtung (12) mit begrenzter Wiedergabefähigkeit mit

Herunterladen der E-Mail und des Anhangs als Antwort auf eine Anforderung (20) der E-Mail von einer Client-Vorrichtung;
Umwandeln des Anhangs in eine Vielzahl von Unterdokumenten (32), wobei jedes Unterdokument in einem Format wiedergegeben wird, das mit der Client-Vorrichtung kompatibel ist und von einer Größe nicht größer als eine maximale Wiedergabegrößenfähigkeit der Client-Vorrichtung ist, wobei ein erstes Unterdokument einen Link (34) zu einem zweiten Unterdokument enthält; und
Liefern des ersten Unterdokuments an die Client-Vorrichtung.

2. Verfahren nach Anspruch 1, weiter mit

Liefern des E-Mails an die Client-Vorrichtung, wobei die E-Mail einen Link zu dem Anhang enthält; und
Empfangen einer Anforderung von der Client-Vorrichtung, die einem Aufruf des Links zu dem Anhang entspricht,

wobei das Umwandeln des Anhangs in die Vielzahl von Unterdokumenten durchgeführt wird, nach Empfangen der Anforderung von der Client-Vorrichtung, die dem Aufruf des Links zu dem Anhang entspricht.

**3.** Verfahren nach Anspruch 2, weiter mit

Herunterladen der E-Mail und des Anhangs als Antwort auf Empfangen der Anforderung der E-Mail und des Anhangs von der Client-Vorrichtung; und
Speichern des E-Mails und des Anhangs.

**4.** Verfahren nach Anspruch 3, wobei Speichern der E-Mail und des Anhangs vor dem Umwandeln des Anhangs durchgeführt wird.

**5.** Verfahren nach einem der vorhergehenden Ansprüche, weiter mit Liefern des zweiten Dokuments an die Client-Vorrichtung als Antwort auf Empfangen eines Aufrufs des Links zu dem zweiten Unterdokument von der Client-Vorrichtung.

**6.** Verfahren nach einem der vorhergehenden Ansprüche, weiter mit Ändern eines Teiles eines Textes des Anhangs basierend auf Präferenzen, die der Client-Vorrichtung zugeordnet sind.

**7.** Verfahren nach Anspruch 6, wobei der Änderungsschritt eines Teils des Textes des Anhangs vor dem Umwandeln des Anhangs in eine Vielzahl von Unterdokumenten durchgeführt wird.

**8.** Verfahren nach einem der vorhergehenden Ansprüche, wobei:

Herunterladen eines Anhangs enthält Herunterladen eines Anhangs, der in einem ersten Format wiedergegeben ist, das nicht mit der Client-Vorrichtung kompatibel ist; und
Umwandeln des Anhangs enthält:

Umwandeln des Anhangs in ein zweites Format;
Segmentieren des Anhangs in die Vielzahl von Unterdokumente; und Umwandeln des ersten Unterdokuments in ein drittes Format, das mit der Client-Vorrichtung kompatibel ist, vor dem Ausliefern des ersten Unterdokuments an die Client-Vorrichtung.

**9.** Verfahren nach Anspruch 8, wobei Umwandeln des Anhangs in ein zweites Format enthält Umwandeln des Anhangs in XML.

**10.** Verfahren nach Anspruch 9, wobei Umwandeln des ersten Unterdokuments in ein drittes Format eines enthält von Umwandeln des ersten Unterdokuments in WML, Umwandeln des ersten Unterdokuments in HDML, und Umwandeln des ersten Unterdokuments in HTML.

**11.** Verfahren nach einem der Ansprüche 8 bis 10, wobei:

Umwandeln des Anhangs in ein zweites Format enthält Umwandeln des Anhangs in ein zweites Format, das eine Hierarchie von Segmenten enthält; und
Segmentieren des Anhangs in eine Vielzahl von Unterdokumente enthält Zusammensetzen der Unterdokumente aus den Segmenten.

**12.** Verfahren nach Anspruch 11, wobei Zusammensetzen enthält Zusammensetzen der Unterdokumente aus den Segmenten gemäß einem Algorithmus, der Zusammensetzen jedes der Unterdokumente aus Segmenten, die gemeinsame Eltern in der Hierarchie besitzen, bevorzugt.

**13.** Verfahren nach Anspruch 11 oder 12, wobei Zusammensetzen enthält Zusammensetzen der Unterdokumente gemäß einem Algorithmus, der Abwägen der jeweiligen Größen der Unterdokumente bevorzugt.

**14.** Verfahren nach einem der Ansprüche 11 bis 13, wobei Zusammensetzen enthält Zusammensetzen der Unterdokumente aus den Segmenten gemäß einem Algorithmus, der Zusammensetzen jedes der Unterdokumente aus Segmenten, für die Kopien der Knoten in der Hierarchie nicht erforderlich sind, bevorzugt.

**15.** Vorrichtung zum Konvertieren eines Anhangs (30) in einer E-Mail (24) zur Auslieferung an eine Client-Vorrichtung (12) mit beschränkter Wiedergabefähigkeit, mit:

einem Konvertierungsmodul (140) zum Konvertieren des Anhangs in ein Zwischenformat;
einem Segmentierungsmodul (144) zum Segmentieren des Anhangs in eine Vielzahl von Unterdokumente (32), wobei jedes Unterdokument von einer Größe nicht größer als eine maximale Wiedergabegrößenfähigkeit der Client-Vorrichtung ist, wobei ein erstes Unterdokument einen Link (34) zu einem zweiten Unterdokument enthält; und
ein Übersetzungsmodul (146) zum Übersetzen eines der Unterdokumente in ein Format, das mit der Client-Vorrichtung kompatibel ist, zum Ausliefern an die Client-Vorrichtung.

**16.** Vorrichtung nach Anspruch 15, weiter mit einem Umsetzungsmodul zum Ändern eines Teiles eines Textes des Anhangs basierend auf Präferenzen, die der Client-Vorrichtung zugeordnet sind.

**17.** Vorrichtung nach Anspruch 15 oder 16, weiter mit einem Inhaltsneuordnungsmodul zum Neuordnen des Inhalts in dem Anhang.

**18.** Vorrichtung nach einem der Ansprüche 15 bis 17, weiter mit einem Antwortvorlademodul zum Liefern eines Unterdokuments, das eine Antwortvorlage zum Antworten auf das E-Mail aufweist, an die Client-Vorrichtung.

## Revendications

**1.** Procédé permettant de convertir un document joint (30) dans un courriel (24) en vue de sa distribution à un dispositif client (12) ayant des capacités de rendu limitées, comportant les étapes consistant à :

télécharger le courriel et le document joint en réponse à une demande (20) d'un dispositif client relativement au courriel ;
transformer le document joint en une pluralité de sous-documents (32), chaque sous-document étant exprimé dans un format qui est compatible avec le dispositif client et étant d'une taille ne dépassant pas une capacité de taille de rendu maximale du dispositif client, dans lequel un premier sous-document inclut un lien (34) à un second sous-document ; et
distribuer le premier sous-document au dispositif client.

**2.** Procédé selon la revendication 1 comportant en outre les étapes consistant à :

distribuer le courriel au dispositif client, le courriel comportant un lien au document joint ; et
recevoir une demande du dispositif client correspondant à un déclenchement du lien pour le document joint,

dans lequel la transformation du document joint en une pluralité de sous-documents est exécutée après réception de la demande du dispositif client correspondant au déclenchement du lien pour le document joint.

**3.** Procédé selon la revendication 2, comportant en outre les étapes consistant à :

télécharger le courriel et le document joint en réponse à la réception de la demande du courriel et du document joint du dispositif client ; et
stocker le courriel et le document joint.

**4.** Procédé selon la revendication 3, dans lequel le stockage du courriel et du document joint est exécuté préalablement à la transformation du document joint.

**5.** Procédé selon l'une quelconque des revendications précédentes, comportant en outre la distribution du deuxième document au dispositif client en réponse à la réception à partir du dispositif client d'un déclenchement du lien au second sous-document.

**6.** Procédé selon l'une quelconque des revendications précédentes, comportant en outre l'étape consistant à modifier une partie de texte du document joint sur la base de préférences associées au dispositif client.

**7.** Procédé selon la revendication 6, dans lequel l'étape de modification d'une partie de texte du document joint est exécutée préalablement à la transformation du document joint en une pluralité de sous-documents.

**8.** Procédé selon l'une quelconque des revendications précédentes, dans lequel :

le téléchargement du document joint inclut l'étape consistant à télécharger un document joint qui est exprimé en un premier format qui est incompatible avec le dispositif client ; et la transformation du document joint inclut les étapes consistant à :

transformer le document joint en un second format ;
segmenter le document joint en la pluralité de sous-documents ; et
transformer le premier sous-document en un troisième format qui est compatible avec le dispositif client avant de distribuer le premier sous-document au dispositif client.

**9.** Procédé selon la revendication 8, dans lequel la transformation du document joint en un deuxième format inclut l'étape consistant à transformer le document joint en un format XML.

**10.** Procédé selon la revendication 9, dans lequel la transformation du premier sous-document en un troisième format inclut l'une des étapes consistant à transformer le premier sous-document au format WML, à transformer le premier sous-document au format HDML, et à transformer le premier sous-document au format HTML.

**11.** Procédé selon l'une quelconque de revendications 8 à 10, dans lequel :

la transformation du document joint en un deuxième format inclut l'étape consistant à transformer le document joint en un deuxième format qui comporte une hiérarchie de segments ; et
la segmentation du document joint en une pluralité de sous-documents comporte l'étape consistant à assembler les sous-documents à partir des segments.

**12.** Procédé selon la revendication 11, dans lequel l'assemblage inclut l'étape consistant à assembler les sous-documents à partir des segments selon un algorithme qui favorise l'assemblage de chacun des sous-documents à partir de segments qui ont des parents communs dans la hiérarchie.

**13.** Procédé selon la revendication 11 ou 12, dans lequel l'assemblage inclut l'étape consistant à assembler les sous-documents selon un algorithme qui favorise l'équilibrage des tailles respectives des sous-documents.

**14.** Procédé selon l'une quelconque de revendications 11 à 13, dans lequel l'assemblage inclut l'étape consistant à assembler les sous-documents à partir des segments selon un algorithme qui favorise l'assemblage de chacun des sous-documents à partir de segments pour lesquels les reproductions des noeuds dans la hiérarchie ne sont pas exigées.

**15.** Dispositif permettant de convertir un document joint (30) dans un courriel (24) en vue de sa distribution à un dispositif client (12) ayant des capacités de rendu limitées, comportant :

un module de conversion (140) en vue de convertir le document joint en un format intermédiaire ;
un module de segmentation (144) en vue de segmenter le document joint en une pluralité de sous-documents (32), chaque sous-document étant d'une taille ne dépassant pas une capacité de taille de rendu maximale du dispositif client, dans lequel un premier sous-document inclut un lien (34) à un second sous-document ; et
un module de translation (146) en vue de translater l'un des sous-documents vers un format qui est compatible avec le dispositif client afin qu'il soit distribué au dispositif client.

**16.** Dispositif selon la revendication 15, comportant en outre un module de transformation en vue de modifier une partie de texte du document joint sur la base de préférences associées au dispositif client.

**17.** Dispositif selon la revendication 15 ou 16, comportant en outre un module de réorganisation de contenu en vue de réorganiser le contenu dans le document joint.

**18.** Dispositif selon l'une quelconque de revendications 15 à 17, comportant en outre un module de modèle de réponse en vue de distribuer au dispositif client un sous-document comportant un modèle de réponse afin de répondre au courriel.

FIG. 1

FIG. 2

40

Determine Maximum Document Size
Permissible by Client Device

42

Convert Attachment Document to
Intermediate Format

44

Segement Attachment into
Subdocuments

46

Store Subdocuments in Memory

48

Respnd to Request For
Subdocument

50

Maintain State

FIG. 3

FIG. 4

FIG. 5

EP 1 412 867 B1

FIG. 6

EP 1 412 867 B1

Receive Document Request ⟋ 100

Retrieve Document ⟋ 102

Interrogate database ⟋ 104

Apply Transformation ⟋ 106

Transmit to Client ⟋ 108

FIG. 7

FIG. 8

FIG. 9

FIG. 10

```
                    ┌──────────────────────┐  ╱ 160
                    │  Convert Document to │ ╱
                    │     Tree Format      │
                    └──────────────────────┘
                               │
                               ▼
                    ┌──────────────────────┐  ╱ 162
                    │  Block Major Regions │ ╱
                    └──────────────────────┘
                               │
                               ▼
                    ┌──────────────────────┐  ╱ 164
                    │      Count Text      │ ╱
                    └──────────────────────┘
                               │
                               ▼
                    ┌──────────────────────┐  ╱ 166
                    │     Mark Movable     │ ╱
                    └──────────────────────┘
                                              ╱ 168
       174          172                      ╱          170
          ╲          ╲                                 ╱
    ┌──────────────────────────────────────────────────────┐
    │                    Aggregate                         │
    │  ┌──────────┐   ┌────────────┐   ┌────────────┐      │
    │  │Find/Attach│  │    Move    │   │ Encapsulate│      │
    │  │  Labels   │  │ Interrupting│  │ Unmovable  │      │
    │  │           │  │   Blocks   │   │   Blocks   │      │
    │  └──────────┘   └────────────┘   └────────────┘      │
    └──────────────────────────────────────────────────────┘
                               │
                               ▼
                    ┌──────────────────────┐  ╱ 176
                    │       Classify       │ ╱
                    └──────────────────────┘
                               │
                               ▼
                    ┌──────────────────────┐  ╱ 178
                    │  Insert Link to Main │ ╱
                    │       Content        │
                    └──────────────────────┘
```

FIG. 11

```
<document>
<img/>
<bold>
This is a text
block.
<table>
<tr>
<td> cell one </td>
<td> cell two </td>
</tr>
</table>
</bold>
<small>
This is another
text block.
</small>
<img/>
</document>
```

200

202

FIG. 12

EP 1 412 867 B1

```
<document>
<img/>
<hr/>
<bold>
This is a text
block.
<table>
<tr>
<td> cell one </td>
<td> cell two </td>
</tr>
</table>
</bold>
<hr/>
<small>
This is another
text block.
</small>
<img/>
</document>
```

**FIG. 13**

EP 1 412 867 B1

FIG. 14

# FIG. 15

# FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0950969 A
- WO 0064110 A
- WO 0042531 A

- DE 19962192 A
- US 1261167 A
- US 1435663 A

### Non-patent literature cited in the description

- **WOO et al.** Providing internet services to mobile phones: a case study. *Personal, Indoor and Mobile Radio Communication, 1998 IEEE,* 1998, 99-105
- **BICKMORE et al.** Web Page Filtering and Re-Authorising for Mobile Users. *The Computer Journal,* 1999, vol. 42, 534-546
- **R. FIELDING et al.** *RFC 2616: Hypertext Transfer Protocol - HTTP/1.1.,* June 1999, http://www.w3.org/Protocols/rfc2616/rfc2616.txt

- **M. HEARST.** TextTiling: Segmenting text into multi-paragraph subtopic passages. *Computational Linguistics,* 1997, vol. 23 (1), 33-65
- **D. KRISTOL ; L. MONTULLI.** *RFC 2109: HTTP State Management Mechanism.,* 1997, http://www.w3.or&rotocols/rfc21O9/rfc21O9.txt
- **LEWIS, D.** Naïve (Bayes) at Forty: The independence assumption in information retrieval. *Proceedings of the European Conference on Machine Learning,* 1998